# EUROPEAN PATENT SPECIFICATION

(11) **EP 4 578 590 B1**
(45) Date of publication and mention of the grant of the patent: **25.11.2026**
(21) Application number: 22961745.1
(22) Date of filing: 13.10.2022
(51) Int. Cl.: B23K 26/22, B23K 26/08, B23K 26/03, B23K 26/04, B23K 26/082, B23K 101/36

(54) **WELDING APPARATUS AND WELDING METHOD**
SCHWEISSVORRICHTUNG UND SCHWEISSVERFAHREN
APPAREIL DE SOUDAGE ET PROCÉDÉ DE SOUDAGE

(43) Date of publication of application: 02.07.2025
(73) Proprietor: Contemporary Amperex Technology (Hong Kong) Limited, Central (HK)
(72) Inventor: QI, Congcheng, Ningde, Fujian 352100 (CN); ZHENG, Shixiong, Ningde, Fujian 352100 (CN); LI, Yingjun, Ningde, Fujian 352100 (CN); ZHAO, Qiangguo, Ningde, Fujian 352100 (CN); LI, Jian, Ningde, Fujian 352100 (CN)
(74) Representative: Gong, Jinping
(86) International application number: PCT/CN2022/125173
(87) International publication number: WO 2024/077556

(56) References cited:
- CN-A- 1 788 914
- CN-A- 113 909 692
- CN-U- 204 686 272
- CN-U- 208 556 647
- CN-U- 210 731 356
- DE-A1- 102008 013 398
- JP-A- 2017 100 167
- US-A1- 2002 046 999
- US-A1- 2005 021 170
- US-A1- 2018 147 664

## Description

### TECHNICAL FIELD

The present invention relates to the field of batteries, and specifically, to a welding apparatus as specified in any of claims 1- 6 and a welding method as specified in any of claims 7-12.

### BACKGROUND

Batteries are widely used in the field of new energy, such as electric vehicles and new energy vehicles. New energy vehicles and electric vehicles have become a new development trend of the automotive industry. In production and manufacturing of batteries, it is often necessary to connect a plurality of components together through welding. However, welding efficiency is low currently. US2018/147664A1 (describing the preamble of claims 1 and 7 respectively) relates to a pressing system for a laser-joining system. US2002/046999A1 relates to a method of forming a welded structure.

### SUMMARY

Embodiments of the present invention aim to provide a welding apparatus and a welding method, which aim to improve a problem of low welding efficiency in a related technology.

According to a first aspect, the present invention provides a welding apparatus according to claim 1. The welding apparatus includes a welding mechanism, an identification mechanism, and a controller. The identification mechanism is configured to obtain position information of welding points. The controller is electrically connected to the identification mechanism and the welding mechanism, and the controller is configured to control, based on the position information, the welding mechanism to move to a next welding point when welding a welding point, so that the welding mechanism completes sequential welding of a plurality of welding points in a continuous moving process. The welding mechanism includes a laser head, a welding galvanometer, and a first driving mechanism. The welding galvanometer is electrically connected to the controller. The first driving mechanism is connected to the laser head and the welding galvanometer, and the first driving mechanism is electrically connected to the controller. The controller is configured to: control, based on the position information, the first driving mechanism to drive the laser head and the welding galvanometer to move to the next welding point; and at the same time, control the welding galvanometer to deflect laser emitted by the laser head to the welding point to complete welding of the welding point.

In the foregoing technical solution, the welding apparatus identifies the welding points by using the identification mechanism, to obtain the position information of the welding points, and controls, by using the controller based on a position signal, the welding mechanism to move to the next welding point when welding the welding point. In this way, the welding mechanism performs welding by using time taken to move from the welding point to the next welding point, which is conducive to reducing welding time of the welding mechanism and improving welding efficiency.

In the foregoing technical solution, the laser head can emit the laser, and the laser can be deflected by the welding galvanometer. Therefore, even if the laser head moves to a next welding point, the laser emitted by the laser head can be deflected to the welding point by the welding galvanometer, to implement welding of the welding point. To start welding the next welding point, it is only necessary to deflect the laser to the next welding point through the welding galvanometer, and time required for adjusting the welding galvanometer is shorter than time required for the laser head to move from the welding point to the next welding point. Therefore, welding time of the laser can be reduced and welding efficiency can be improved.

As an optional technical solution of embodiments of the present invention, the welding mechanism further includes a second driving mechanism. The second driving mechanism is connected to the first driving mechanism and the welding galvanometer, and the second driving mechanism is electrically connected to the controller. The controller is configured to: when the welding point exceeds an adjustment range of the welding galvanometer, control the second driving mechanism to drive the welding galvanometer to move, so that the welding point enters the adjustment range of the welding galvanometer, and the laser is deflected to the welding point.

In the foregoing technical solution, the second driving mechanism is disposed, to independently adjust a position of the welding galvanometer. If a position of the welding point exceeds the adjustment range of the welding galvanometer, the second driving mechanism may drive the welding galvanometer to move to the welding point, so that the welding point enters the adjustment range of the welding galvanometer. A driving speed of the second driving mechanism may be faster than a driving speed of the first driving mechanism, to implement rapid movement of the welding galvanometer, deflect the laser to the welding point to a greatest extent, and ensure welding quality. In addition, due to a fast speed of the second driving mechanism, the welding galvanometer can quickly move to the next welding point after completing welding the welding point, which is conducive to reducing welding time of the welding mechanism and improving welding efficiency.

As an optional technical solution of embodiments of the present invention the identification mechanism is further configured to measure a distance between the welding point and the welding mechanism, to obtain a defocus amount.

In the foregoing technical solution, the identification mechanism can obtain the position information of the welding points, and can obtain the defocus amounts. One component implements two functions, which is conducive to simplifying a structure of the welding apparatus.

As an optional technical solution of embodiments of the present invention the welding mechanism includes a laser head and a first driving mechanism. The first driving mechanism includes a first driving unit and a second driving unit. The second driving unit is connected to the first driving unit. The laser head is connected to the second driving unit. Both the first driving unit and the second driving unit are electrically connected to the controller. The controller is configured to control, based on the position information, the first driving unit to drive the laser head to move in a first direction, and the controller is further configured to control the second driving unit to drive the laser head to move in a second direction, to adjust the welding defocus amount of the laser head to a preset range.

In the foregoing technical solution, the first driving unit can drive the laser head to move in the first direction, so that the laser head can move toward the next welding point. The second driving unit can drive the laser head to move in the second direction, to adjust the welding defocus amount, so that defocus amounts, of the laser head, existing when the laser head welds the welding point and the next welding point are within the preset range, to ensure welding quality.

As an optional technical solution of embodiments of the present invention the identification mechanism is connected to the welding mechanism.

In the foregoing technical solution, the identification mechanism is connected to the welding mechanism. The identification mechanism can identify a welding point after the next welding point when the welding mechanism moves to the next welding point. In this way, the identification mechanism does not need to identify all the welding points at one time, but continuously identifies the welding point in the continuous moving process of the welding mechanism, which reduces a requirement for the identification mechanism and is conducive to reducing production costs.

As an optional technical solution of embodiments of the present invention the welding apparatus further includes a third driving mechanism. The third driving mechanism is connected to the welding mechanism and the identification mechanism, and the third driving mechanism is configured to adjust a position of the identification mechanism on the welding mechanism.

In the foregoing technical solution, the third driving mechanism is disposed, so that the position of the identification mechanism is adjustable, the identification mechanism can adapt to various to-be-welded members, compatibility of the welding apparatus is improved, and different application scenarios are met.

According to a second aspect, the present invention further provides a welding method according to claim 7. The welding method includes: obtaining position information of welding points; and controlling, based on the position information, a welding mechanism to move to a next welding point when welding a welding point, so that the welding mechanism completes sequential welding of a plurality of welding points in a continuous moving process. The welding mechanism includes a laser head and a welding galvanometer. The controlling, based on the position information, a welding mechanism to move to a next welding point when welding a welding point includes: adjusting the welding galvanometer based on position information of the welding point, so that laser emitted by the laser head is deflected to the welding point.

In the foregoing technical solution, the welding mechanism moves to the next welding point when welding the welding point. In this way, the welding mechanism performs welding by using time taken to move from the welding point to the next welding point, which is conducive to reducing welding time of the welding mechanism and improving welding efficiency.

In the foregoing technical solution, the laser head can emit the laser, and the laser can be deflected by the welding galvanometer. Therefore, even if the laser head moves to the next welding point, the laser emitted by the laser head can be deflected to the welding point by the welding galvanometer, to implement welding of the welding point.

As an optional technical solution of embodiments of the present invention the welding mechanism further includes a second driving mechanism. The second driving mechanism is connected to the welding galvanometer. The controlling, based on the position information, a welding mechanism to move to a next welding point when welding a welding point includes: If the welding point exceeds an adjustment range of the welding galvanometer, the second driving mechanism drives the welding galvanometer to move, so that the laser emitted by the laser head is able to be deflected to the welding point by the welding galvanometer.

In the foregoing technical solution, the second driving mechanism is disposed, to independently adjust a position of the welding galvanometer. If a position of the welding point exceeds the adjustment range of the welding galvanometer, the second driving mechanism may drive the welding galvanometer to move to the welding point, so that the welding point enters the adjustment range of the welding galvanometer.

As an optional technical solution of embodiments of the present invention before the welding mechanism welds the welding point, the welding method further includes: The second driving mechanism adjusts the position of the welding galvanometer, so that the welding point is within the adjustment range of the welding galvanometer.

In the foregoing technical solution, before the welding point is welded, if the welding point is within the adjustment range of the welding galvanometer, the second driving mechanism does not operate. If the welding point is outside the adjustment range of the welding galvanometer, the second driving mechanism drives the welding galvanometer to move to the welding point, so that the welding point is within the adjustment range of the welding galvanometer.

As an optional technical solution of embodiments of the present invention before the welding mechanism welds the welding point, the welding method further includes: adjusting a welding defocus amount of the welding mechanism to a preset range.

In the foregoing technical solution, the welding defocus amount of the welding mechanism is adjusted to the preset range, which is conducive to ensuring welding quality.

As an optional technical solution of embodiments of the present invention the adjusting a welding defocus amount of the welding mechanism to a preset range includes: measuring a distance between the welding mechanism and the welding point, and obtaining the defocus amount based on the distance.

In the foregoing technical solution, the distance between the welding mechanism and the welding point is measured, and the defocus amount is obtained based on the distance, which is simple and convenient, and is easy to operate.

As an optional technical solution of embodiments of the present invention before the obtaining position information of welding points, the method includes: fastening a to-be-welded member by using a welding fixture. The obtaining position information of welding points includes: filtering out the welding fixture based on a height difference between the welding fixture and the welding point, to determine the position information of the welding points.

In the foregoing technical solution, the welding fixture is disposed to fasten the to-be-welded member, so that a risk of displacement of the to-be-welded member in a welding process is reduced, which is conducive to improving welding quality. Because there is a clear height difference between the welding fixture and the to-be-welded member, the welding fixture may be filtered out based on the height difference, to accurately obtain the position information of the welding points.

### DESCRIPTION OF DRAWINGS

To describe technical solutions in embodiments of the present invention more clearly, the following briefly describes the accompanying drawings required for describing some embodiments. It should be understood that the accompanying drawings below show merely some embodiments of the present invention and thus should not be considered as limitations on the scope of the present invention, which is defined in the appended claims. Persons of ordinary skill in the art may still derive other related drawings from the accompanying drawings without creative efforts.
FIG. 1 is a diagram of a structure of a welding apparatus;
FIG. 2 is a block diagram of a welding apparatus;
FIG. 3 is a block diagram of a welding mechanism;
FIG. 4 is a block diagram of another mechanism;
FIG. 5 is a block diagram of a first driving mechanism;
FIG. 6 is a block diagram of a welding apparatus; and
FIG. 7 is a block diagram of a welding method.

Reference signs: 10: welding apparatus; 11: welding mechanism; 111: laser head; 112: welding galvanometer; 113: first driving mechanism; 1131: first driving unit; 1132: second driving unit; 114: second driving mechanism; 12: identification mechanism; 13: controller; 14: third driving mechanism; 15: laser; 16: welding point; 20: to-be-welded member; 30: welding fixture; and 40: welding method.

### DESCRIPTION OF EMBODIMENTS

To make the objectives, technical solutions, and advantages of embodiments of the present invention clearer, the following clearly describes the technical solutions in embodiments of the present invention with reference to the accompanying drawings in embodiments of this application. It is clear that, the described embodiments are merely some rather than all of embodiments of this application. All other embodiments obtained by persons of ordinary skill in the art based on embodiments of this application without creative efforts shall fall within the protection scope of this application.

Unless otherwise defined, all technical and scientific terms used in this application shall have the same meanings as commonly understood by persons skilled in the art to which this application relates. The terms used in the specification of this application are intended to merely describe specific embodiments rather than to limit this application. The terms "include", "comprise", and any variations thereof in the specification, claims, and the foregoing description of drawings of this application are intended to cover non-exclusive inclusions. In the specification, claims, or accompanying drawings of this application, the terms "first", "second", and the like are intended to distinguish between different objects rather than to describe a particular order or a primary-secondary relationship.

An "embodiment" mentioned therein means that a particular feature, structure, or characteristic described with reference to this embodiment may be included in at least one embodiment of the present invention. The phrase shown in various locations in the specification may not necessarily refer to a same embodiment and is not an independent or optional embodiment exclusive from another embodiment.

In the description, it should be noted that unless otherwise specified and defined explicitly, the terms "mount", "connect", "join", and "attach" should be understood in their general senses. For example, they may indicate a fixed connection, a detachable connection, or an integral connection; and a direct connection, an indirect connection via an intermediate medium, or an internal communication between two elements. Persons of ordinary skill in the art can understand specific meanings of these terms in this application based on specific situations.

The term "and/or" describes only an association relationship for describing associated objects and represents that three relationships may exist. For example, A and/or B may represent the following three cases: Only A exists, both A and B exist, and only B exists. In addition, a character "/" in this application generally indicates an "or" relationship between the associated objects.

The same reference numerals denote the same components. For brevity, in different embodiments, detailed descriptions of the same components are not repeated. It should be understood that as shown in the accompanying drawings, sizes such as thicknesses, lengths, and widths of various components and sizes such as overall thicknesses, lengths, and widths of integrated apparatuses are merely for illustrative purposes and should not constitute any limitation on the present invention.

"A plurality of" means more than two (inclusive).

Batteries are widely used in the field of new energy, such as electric vehicles and new energy vehicles. New energy vehicles and electric vehicles have become a new development trend of the automotive industry. In production and manufacturing of batteries, it is often necessary to connect a plurality of components together through welding. However, welding efficiency is low currently.

An inventor found through research that in the prior art, a position of a welding mechanism is static during welding, and after welding of a welding point is completed, the welding mechanism moves to a next welding point. In this way, it is necessary to wait for the welding mechanism to move from the welding point to the next welding point before welding is started again, and time taken to wait for the welding mechanism to move is not used, which results in low welding efficiency.

In view of this, an embodiment of the present invention provides a welding apparatus. The welding apparatus includes a welding mechanism, an identification mechanism, and a controller. The identification mechanism is configured to obtain position information of welding points. The controller is electrically connected to the identification mechanism and the welding mechanism, and the controller is configured to control, based on the position information, the welding mechanism to move to a next welding point when welding a welding point, so that the welding mechanism completes sequential welding of a plurality of welding points in a continuous moving process.

The welding apparatus identifies the welding points by using the identification mechanism, to obtain the position information of the welding points, and controls, by using the controller based on a position signal, the welding mechanism to move to the next welding point when welding the welding point. In this way, the welding mechanism performs welding by using time taken to move from the welding point to the next welding point, which is conducive to reducing welding time of the welding mechanism and improving welding efficiency.

The technical solutions described in embodiments are suitable for welding to-be-welded members, and the to-be-welded members may be a battery post and a bus member, a tab and a current collecting member, and the like.

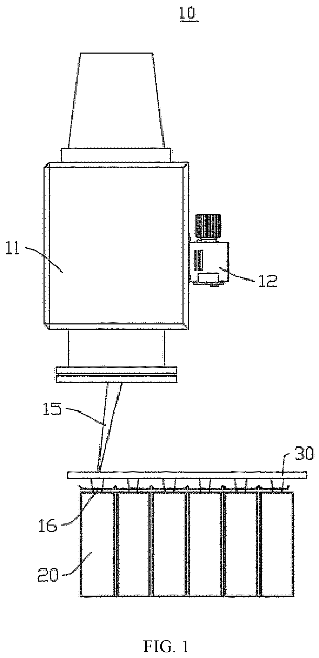

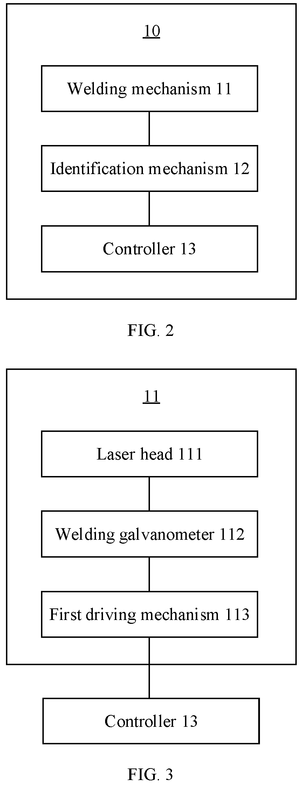

Refer to FIG. 1 and FIG. 2. FIG. 1 is a diagram of a structure of a welding apparatus 10. FIG. 2 is a block diagram of the welding apparatus 10. The welding apparatus 10 includes a welding mechanism 11, an identification mechanism 12, and a controller 13. The identification mechanism 12 is configured to obtain position information of welding points 16. The controller 13 is electrically connected to the identification mechanism 12 and the welding mechanism 11. The controller 13 is configured to control, based on the position information, the welding mechanism 11 to move to a next welding point 16 when welding a welding point 16, so that the welding mechanism 11 completes sequential welding of a plurality of welding points 16 in a continuous moving process.

It should be noted that a connection line between the welding mechanism 11 and the identification mechanism 12 and a connection line between the identification mechanism 12, and the controller 13 in FIG. 2 are intended to show that there is a specific connection relationship among the welding mechanism 11, the identification mechanism 12, and the controller 13, rather than that the welding mechanism 11 is connected to the controller 13 through the identification mechanism 12. In short, FIG. 2 is intended to show that the welding apparatus 10 includes the welding mechanism 11, the identification mechanism 12, and the controller 13, and there is a specific connection relationship among the welding mechanism 11, the identification mechanism 12, and the controller 13. The same is true for a connection line between two components in subsequent drawings.

The welding mechanism 11 is a part, of the welding apparatus 10, that mainly implements welding of a to-be-welded member 20. The welding mechanism 11 may usually generate high temperature or high pressure to join two to-be-welded members 20 together, so that the two to-be-welded members 20 are fastened. The welding mechanism 11 may be a gas welding mechanism, an electric welding mechanism, a laser welding mechanism, an ultrasonic welding mechanism, or the like.

The identification mechanism 12 is a mechanism configured to obtain the position information of the welding points 16. The identification mechanism 12 is electrically connected to the controller 13 to transmit the obtained position information to the controller 13, so that the controller 13 controls the welding mechanism 11 to operate. The identification mechanism 12 may obtain position information of all the welding points 16 at one time, or obtain position information of some welding points 16 at one time. For example, the identification mechanism 12 may be an industrial camera, and the identification mechanism 12 shoots and processes an image of the to-be-welded member 20, to obtain the position information of the welding points 16. The identification mechanism 12 may alternatively be a ranging mechanism. The ranging mechanism can measure a distance between the ranging mechanism and the to-be-welded member 20, and filter out an interference factor based on a height difference, to obtain the position information of the welding points 16.

The controller 13 is a component having an information processing function, such as a CPU (central processing unit), a PLC (Programmable Logic Controller), and an ECU (Electronic Control Unit). The controller 13 is electrically connected to the identification mechanism 12 and the welding mechanism 11, and the controller 13 controls, based on the position information, the welding mechanism 11 to operate.

The welding apparatus 10 identifies the welding points 16 by using the identification mechanism 12, to obtain the position information of the welding points 16, and controls, by using the controller 13 based on a position signal, the welding mechanism 11 to move to the next welding point 16 when welding the welding point 16. In this way, the welding mechanism 11 performs welding by using time taken to move from the welding point 16 to the next welding point 16, which is conducive to reducing welding time of the welding mechanism 11 and improving welding efficiency.

Refer to FIG. 2 and FIG. 3. FIG. 3 is a block diagram of the welding mechanism 11 according to some embodiments of present invention. According to the present invention, the welding mechanism 11 includes a laser head 111, a welding galvanometer 112 and a first driving mechanism 113. The welding galvanometer 112 is electrically connected to the controller 13. The first driving mechanism 113 is connected to the laser head 111 and the welding galvanometer 112, and the first driving mechanism 113 is electrically connected to the controller 13. The controller 13 is configured to: control, based on the position information, the first driving mechanism 113 to drive the laser head 111 and the welding galvanometer 112 to move to the next welding point 16; and at the same time, control the welding galvanometer 112 to deflect laser 15 emitted by the laser head 111 to the welding point 16 to complete welding of the welding point 16.

The laser head 111 is a component, of the welding mechanism 11, that emits the laser 15. The laser 15 emitted by the laser head 111 has a high energy density, which may partially melt the to-be-welded member 20, so that two to-be-welded members 20 are fastened.

The welding galvanometer 112 includes a plurality of galvanometers, and each galvanometer can reflect the laser 15. The welding galvanometer 112 may deflect the laser 15 emitted by the laser head 111 to the welding point 16, so that the laser head 111 welds the welding point 16 in a moving process.

The first driving mechanism 113 is a mechanism configured to implement movement of the welding galvanometer 112 and the laser head 111. The first driving mechanism 113 may be a three-axis moving mechanism, a two-axis moving mechanism, or a single-axis moving mechanism. For example, the first driving mechanism 113 includes a front-rear driving air cylinder, a left-right driving air cylinder, and an up-down driving air cylinder. The left-right driving air cylinder is connected to an output end of the front-rear driving air cylinder. The up-down driving air cylinder is connected to an output end of the left-right driving air cylinder. The laser head 111 and the welding galvanometer 112 are connected to an output end of the up-down driving air cylinder. When the front-rear driving air cylinder operates, the laser head 111 and the welding galvanometer 112 can move in a front-rear direction. When the left-right driving air cylinder operates, the laser head 111 and the welding galvanometer 112 can move in a left-right direction. When the up-down driving air cylinder operates, the laser head 111 and the welding galvanometer 112 can move in an up-down direction. The first driving mechanism 113 may include a linear driving mechanism to implement movement along a straight line. The linear driving mechanism may be an electric cylinder, an oil cylinder, an air cylinder, or the like. The first driving mechanism 113 may further include a rotary driving member and a transmission mechanism. The rotary driving member can output rotary motion, and the transmission mechanism converts the rotary motion output by the rotary driving member into rectilinear motion of the laser head 111 and the welding galvanometer 112. The rotary driving member may be a motor, an internal combustion engine, or the like. The transmission mechanism may be a leadscrew-nut mechanism, a crank-slider mechanism, or the like.

The laser head 111 can emit the laser 15, and the laser 15 can be deflected by the welding galvanometer 112. Therefore, even if the laser head 111 moves to the next welding point 16, the laser 15 emitted by the laser head 111 can be deflected to the welding point 16 by the welding galvanometer 112, to implement welding of the welding point 16. To start welding the next welding point 16, it is only necessary to deflect the laser 15 to the next welding point 16 through the welding galvanometer 112, and time required for adjusting the welding galvanometer 112 is shorter than time required for the laser head 111 to move from the welding point 16 to the next welding point 16. Therefore, welding time of the laser 15 can be reduced and welding efficiency can be improved. In addition, the welding galvanometer 112 may alternatively start to prepare for welding of the next welding point 16 after welding of the welding point 16 is completed and before the laser head 111 reaches the next welding point 16, to further reduce time consumption and improve welding efficiency.

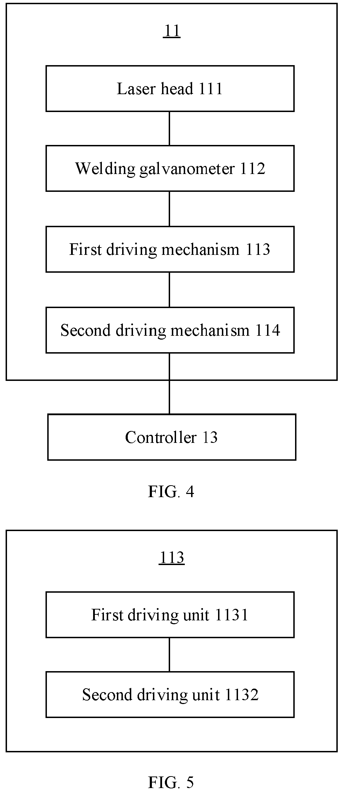

Refer to FIG. 2, FIG. 3, and FIG. 4. FIG. 4 is a block diagram of the welding mechanism 11, which further includes a second driving mechanism 114. The second driving mechanism 114 is connected to the first driving mechanism 113 and the welding galvanometer 112, and the second driving mechanism 114 is electrically connected to the controller 13. The controller 13 is configured to: when the welding point 16 exceeds an adjustment range of the welding galvanometer 112, control the second driving mechanism 114 to drive the welding galvanometer 112 to move, so that the welding point 16 enters the adjustment range of the welding galvanometer 112, and the laser 15 is deflected to the welding point 16.

The second driving mechanism 114 is a mechanism configured to implement relative movement between the welding galvanometer 112 and the laser head 111. The second driving mechanism 114 may be a three-axis moving mechanism, a two-axis moving mechanism, or a single-axis moving mechanism. For example, the second driving mechanism 114 includes a left-right driving air cylinder. The left-right driving air cylinder is connected to the first driving mechanism 113, and the welding galvanometer 112 is connected to an output end of the left-right driving air cylinder. When the second driving mechanism 114 operates, the welding galvanometer 112 can move in a left-right direction relative to the laser head 111. The second driving mechanism 114 may include a linear driving mechanism to implement movement along a straight line. The linear driving mechanism may be an electric cylinder, an oil cylinder, an air cylinder, or the like. The second driving mechanism 114 may further include a rotary driving member and a transmission mechanism. The rotary driving member can output rotary motion, and the transmission mechanism converts the rotary motion output by the rotary driving member into rectilinear motion of the welding galvanometer 112. The rotary driving member may be a motor, an internal combustion engine, or the like. The transmission mechanism may be a leadscrew-nut mechanism, a crank-slider mechanism, or the like.

The second driving mechanism 114 is disposed, to independently adjust a position of the welding galvanometer 112. If a position of the welding point 16 exceeds the adjustment range of the welding galvanometer 112, the second driving mechanism 114 may drive the welding galvanometer 112 to move to the welding point 16, so that the welding point 16 enters the adjustment range of the welding galvanometer 112. A driving speed of the second driving mechanism 114 may be faster than a driving speed of the first driving mechanism 113, to implement rapid movement of the welding galvanometer 112, deflect the laser 15 to the welding point 16 to a greatest extent, and ensure welding quality. In addition, due to a fast speed of the second driving mechanism 114, the welding galvanometer 112 can quickly move to the next welding point 16 after completing welding the welding point 16, which is conducive to reducing welding time of the welding mechanism 11 and improving welding efficiency. Certainly, the second driving mechanism 114 may alternatively move the welding galvanometer 112 to the next welding point 16 after welding of the welding point 16 is completed and before the laser head 111 reaches the next welding point 16, to further reduce time consumption and improve welding efficiency.

In some embodiments, the identification mechanism 12 is further configured to measure a distance between the welding point 16 and the welding mechanism 11, to obtain a defocus amount.

The defocus amount is a distance between a focal point of the laser 15 and a substance that the laser acts on. In a welding process, the defocus amount has great impact on welding quality. Laser welding usually requires a specific defocus amount, because a power density of a spot center at the focal point of the laser 15 is excessively high, making it prone to vaporizing and becoming a hole. Power density distribution is relatively uniform on each plane away from the focal point of the laser 15.

When the identification mechanism 12 is mounted, the focal point of the laser 15 emitted by the welding mechanism 11 may be found first. Then, the identification mechanism 12 is mounted, and a distance between the identification mechanism 12 and the focal point is taken as a 0 position of the identification mechanism 12. In this case, a numerical value obtained through subsequent measurement of the identification mechanism 12 may be directly taken as the defocus amount.

The identification mechanism 12 can obtain the position information of the welding points 16, and can obtain the defocus amounts. One component implements two functions, which is conducive to simplifying a structure of the welding apparatus 10.

Refer to FIG. 2, FIG. 3, FIG. 4, and FIG. 5. FIG. 5 is a block diagram of the first driving mechanism 113. In some embodiments, the welding mechanism 11 includes the laser head 111 and the first driving mechanism 113. The first driving mechanism 113 includes a first driving unit 1131 and a second driving unit 1132. The second driving unit 1132 is connected to the first driving unit 1131, the laser head 111 is connected to the second driving unit 1132, and both the first driving unit 1131 and the second driving unit 1132 are electrically connected to the controller 13. The controller 13 is configured to control, based on the position information, the first driving unit 1131 to drive the laser head 111 to move in a first direction. The controller 13 is further configured to control the second driving unit 1132 to drive the laser head 111 to move in a second direction, to adjust the welding defocus amount of the laser head 111 to a preset range.

The first driving mechanism 113 is a mechanism configured to implement movement of the welding galvanometer 112 and the laser head 111. The first driving mechanism 113 may be a three-axis moving mechanism or a two-axis moving mechanism. The first driving unit 1131 and the second driving unit 1132 are configured to implement two-axis movement of the laser head 111. For example, the first driving unit 1131 may include a left-right driving air cylinder, and the second driving unit 1132 may include an up-down driving air cylinder. The up-down driving air cylinder is connected to an output end of the left-right driving air cylinder. The laser head 111 and the welding galvanometer 112 are connected to an output end of the up-down driving air cylinder. When the left-right driving air cylinder operates, the laser head 111 and the welding galvanometer 112 can move in a left-right direction. When the up-down driving air cylinder operates, the laser head 111 and the welding galvanometer 112 can move in an up-down direction.

The first driving unit 1131 and the second driving unit 1132 may include linear driving mechanisms to implement movement along a straight line. The linear driving mechanism may be an electric cylinder, an oil cylinder, an air cylinder, or the like. The first driving unit 1131 and the second driving unit 1132 may further include rotary driving members and transmission mechanisms. The rotary driving member can output rotary motion, and the transmission mechanism converts the rotary motion output by the rotary driving member into rectilinear motion of the laser head 111 and the welding galvanometer 112. The rotary driving member may be a motor, an internal combustion engine, or the like. The transmission mechanism may be a leadscrew-nut mechanism, a crank-slider mechanism, or the like.

The first direction and the second direction are set at an included angle greater than 0° and less than or equal to 90°. In other words, the first direction and the second direction may form an acute angle, and the first direction and the second direction may alternatively be perpendicular.

The first driving unit 1131 can drive the laser head 111 to move in the first direction, so that the laser head 111 can move toward the next welding point 16. The second driving unit 1132 can drive the laser head 111 to move in the second direction, to adjust the welding defocus amount, so that defocus amounts, of the laser head 111, existing when the laser head welds the welding point 16 and the next welding point 16 are within the preset range, to ensure welding quality.

Refer to FIG. 1 to FIG. 5. In some embodiments, the identification mechanism 12 is connected to the welding mechanism 11.

"The identification mechanism 12 is connected to the welding mechanism 11" includes that the identification mechanism 12 is directly connected to the welding mechanism 11 and that the identification mechanism 12 is indirectly connected to the welding mechanism 11. That the identification mechanism 12 is indirectly connected to the welding mechanism 11 means that the identification mechanism 12 is connected to the welding mechanism 11 through an intermediate component.

The identification mechanism 12 is connected to the welding mechanism 11. The identification mechanism 12 can identify a welding point 16 after the next welding point 16 when the welding mechanism 11 moves to the next welding point 16. In this way, the identification mechanism 12 does not need to identify all the welding points 16 at one time, but continuously identifies the welding point 16 in the continuous moving process of the welding mechanism 11, which reduces a requirement for the identification mechanism 12 and is conducive to reducing production costs.

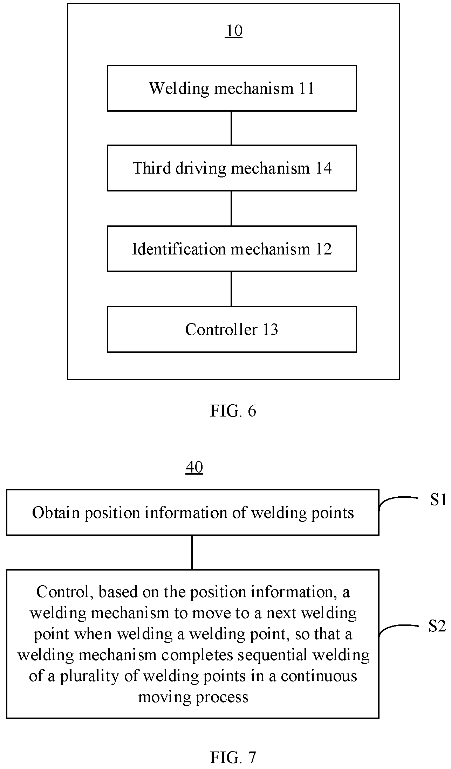

Refer to FIG. 6. FIG. 6 is a block diagram of the welding apparatus 10 according to some other embodiments of this application. In some other embodiments, the welding apparatus 10 further includes a third driving mechanism 14. The third driving mechanism is 14 connected to the welding mechanism 11 and the identification mechanism 12, and the third driving mechanism 14 is configured to adjust a position of the identification mechanism 12 on the welding mechanism 11.

The third driving mechanism 14 is a mechanism configured to implement relative movement between the identification mechanism 12 and the welding mechanism 11. The third driving mechanism 14 may be a three-axis moving mechanism, a two-axis moving mechanism, or a single-axis moving mechanism. For a structure of the third driving mechanism 14, refer to the first driving mechanism 113. Details are not described herein again.

The third driving mechanism 14 is disposed, so that the position of the identification mechanism 12 is adjustable, the identification mechanism can adapt to various to-be-welded members 20, compatibility of the welding apparatus 10 is improved, and different application scenarios are met.

Refer to FIG. 7. FIG. 7 is a block diagram of a welding method 40, which includes:
Step S1: Obtain position information of welding points 16.
Step S2: Control, based on the position information, a welding mechanism 11 to move to a next welding point 16 when welding a welding point 16, so that the welding mechanism 11 completes sequential welding of a plurality of welding points 16 in a continuous moving process.

In the welding method 40, the welding mechanism 11 moves to the next welding point 16 when welding the welding point 16. In this way, the welding mechanism 11 performs welding by using time taken to move from the welding point 16 to the next welding point 16, which is conducive to reducing welding time of the welding mechanism 11 and improving welding efficiency.

Refer to FIG. 3 and FIG. 7, the welding mechanism 11 includes a laser head 111 and a welding galvanometer 112. The controlling, based on the position information, a welding mechanism 11 to move to a next welding point 16 when welding a welding point 16 includes: adjusting the welding galvanometer 112 based on position information of the welding point 16, so that laser 15 emitted by the laser head 111 is deflected to the welding point 16.

The laser head 111 emits the laser 15, and the laser 15 is deflected by the welding galvanometer 112. Therefore, even if the laser head 111 moves to the next welding point 16, the laser 15 emitted by the laser head 111 is deflected to the welding point 16 by the welding galvanometer 112, to implement welding of the welding point 16.

Refer to FIG. 4 and FIG. 7. In some embodiments, the welding mechanism 11 further includes a second driving mechanism 114, and the second driving mechanism 114 is connected to the welding galvanometer 112. The controlling, based on the position information, a welding mechanism 11 to move to a next welding point 16 when welding a welding point 16 includes: If the welding point 16 exceeds an adjustment range of the welding galvanometer 112, the second driving mechanism 114 drives the welding galvanometer 112 to move, so that the laser 15 emitted by the laser head 111 is able to be deflected to the welding point 16 by the welding galvanometer 112.

The second driving mechanism 114 is disposed, to independently adjust a position of the welding galvanometer 112. If a position of the welding point 16 exceeds the adjustment range of the welding galvanometer 112, the second driving mechanism 114 may drive the welding galvanometer 112 to move to the welding point 16, so that the welding point 16 enters the adjustment range of the welding galvanometer 112.

In some embodiments, before the welding mechanism 11 welds the welding point 16, the welding method 40 further includes: The second driving mechanism 114 adjusts the position of the welding galvanometer 112, so that the welding point 16 is within the adjustment range of the welding galvanometer 112.

When a previous welding point 16 is welded, the second driving mechanism 114 may drive the welding galvanometer 112 to move to the previous welding point 16 because the previous welding point 16 exceeds the range of the welding galvanometer 112. After the previous welding point 16 is welded, the welding galvanometer 112 is still in a position close to the previous welding point 16. In this case, the welding point 16 may not be within the adjustment range of the welding galvanometer 112. Therefore, before the welding mechanism 11 welds the welding point 16, the second driving mechanism 114 adjusts the position of the welding galvanometer 112, so that the welding point 16 is within the adjustment range of the welding galvanometer 112.

Before the welding point 16 is welded, if the welding point 16 is within the adjustment range of the welding galvanometer 112, the second driving mechanism 114 does not operate. If the welding point 16 is outside the adjustment range of the welding galvanometer 112, the second driving mechanism 114 drives the welding galvanometer 112 to move to the welding point 16, so that the welding point 16 is within the adjustment range of the welding galvanometer 112.

In some embodiments, before the welding mechanism 11 welds the welding point 16, the welding method 40 further includes: adjusting a welding defocus amount of the welding mechanism 11 to a preset range.

In a welding process, the defocus amount has great impact on welding quality. Laser welding usually requires a specific defocus amount. Therefore, before the welding mechanism 11 welds the welding point 16, the welding defocus amount of the welding mechanism 11 is first adjusted to the preset range.

The welding defocus amount of the welding mechanism 11 is adjusted to the preset range, which is conducive to ensuring welding quality.

In some embodiments, the adjusting a welding defocus amount of the welding mechanism 11 to a preset range includes: measuring a distance between the welding mechanism 11 and the welding point 16, and obtaining the defocus amount based on the distance.

When an identification mechanism 12 (or a ranging mechanism) is mounted, a focal point of the laser 15 emitted by the welding mechanism 11 may be found first. Then, the identification mechanism 12 is mounted, and a distance between the identification mechanism 12 and the focal point is taken as a 0 position of the identification mechanism 12. In this case, a numerical value obtained through subsequent measurement of the identification mechanism 12 may be directly taken as the defocus amount.

The distance between the welding mechanism 11 and the welding point 16 is measured, and the defocus amount is obtained based on the distance, which is simple and convenient, and is easy to operate.

In some embodiments, before the obtaining position information of welding points 16, the method includes: fastening a to-be-welded member 20 by using a welding fixture 30. The obtaining position information of welding points 16 includes: filtering out the welding fixture 30 based on a height difference between the welding fixture 30 and the welding point 16, to determine the position information of the welding points 16.

The welding fixture 30 is disposed to fasten the to-be-welded member 20, so that a risk of displacement of the to-be-welded member 20 in a welding process is reduced, which is conducive to improving welding quality. Because there is a clear height difference between the welding fixture 30 and the to-be-welded member 20, the welding fixture 30 may be filtered out based on the height difference, to accurately obtain the position information of the welding points 16.

Refer to FIG. 1 to FIG. 7.

Figure 7 provides a welding apparatus 10. The welding apparatus 10 includes a welding mechanism 11, an identification mechanism 12, and a controller 13. The identification mechanism 12 is configured to obtain position information of welding points 16. The controller 13 is electrically connected to the identification mechanism 12 and the welding mechanism 11. The controller 13 is configured to control, based on the position information, the welding mechanism 11 to move to a next welding point 16 when welding a welding point 16, so that the welding mechanism 11 completes sequential welding of a plurality of welding points 16 in a continuous moving process. The welding mechanism 11 includes a laser head 111, a welding galvanometer 112, and a first driving mechanism 113. The welding galvanometer 112 is electrically connected to the controller 13. The first driving mechanism 113 is connected to the laser head 111 and the welding galvanometer 112, and the first driving mechanism 113 is electrically connected to the controller 13. The controller 13 is configured to: control, based on the position information, the first driving mechanism 113 to drive the laser head 111 and the welding galvanometer 112 to move to the next welding point 16; and at the same time, control the welding galvanometer 112 to deflect laser 15 emitted by the laser head 111 to the welding point 16 to complete welding of the welding point 16.

The welding apparatus 10 identifies the welding points 16 by using the identification mechanism 12, to obtain the position information of the welding points 16, and controls, by using the controller 13 based on a position signal, the welding mechanism 11 to move to the next welding point 16 when welding the welding point 16. In this way, the welding mechanism 11 performs welding by using time taken to move from the welding point 16 to the next welding point 16, which is conducive to reducing welding time of the welding mechanism 11 and improving welding efficiency. The laser head 111 can emit the laser 15, and the laser 15 can be deflected by the welding galvanometer 112. Therefore, even if the laser head 111 moves to the next welding point 16, the laser 15 emitted by the laser head 111 can be deflected to the welding point 16 by the welding galvanometer 112, to implement welding of the welding point 16. To start welding the next welding point 16, it is only necessary to deflect the laser 15 to the next welding point 16 through the welding galvanometer 112, and time required for adjusting the welding galvanometer 112 is shorter than time required for the laser head 111 to move from the welding point 16 to the next welding point 16. Therefore, welding time of the laser 15 can be reduced and welding efficiency can be improved.

A welding method 40 is provided, which includes:
Step S1: Obtain position information of welding points 16.
Step S2: Control, based on the position information, a welding mechanism 11 to move to a next welding point 16 when welding a welding point 16, so that the welding mechanism 11 completes sequential welding of a plurality of welding points 16 in a continuous moving process.

The welding mechanism 11 moves to the next welding point 16 when welding the welding point 16. In this way, the welding mechanism 11 performs welding by using time taken to move from the welding point 16 to the next welding point 16, which is conducive to reducing welding time of the welding mechanism 11 and improving welding efficiency.

The welding mechanism 11 includes a laser head 111 and a welding galvanometer 112. The controlling, based on the position information, a welding mechanism 11 to move to a next welding point 16 when welding a welding point 16 includes: adjusting the welding galvanometer 112 based on position information of the welding point 16, so that laser 15 emitted by the laser head 111 is deflected to the welding point 16. The laser head 111 can emit the laser 15, and the laser 15 can be deflected by the welding galvanometer 112. Therefore, even if the laser head 111 moves to the next welding point 16, the laser 15 emitted by the laser head 111 can be deflected to the welding point 16 by the welding galvanometer 112, to implement welding of the welding point 16.

## Claims

1. A welding apparatus (10), comprising:
a welding mechanism (11);
an identification mechanism (12) configured to obtain position information of welding points (16);
the welding apparatus (10) being **characterised by**:
a controller (13) electrically connected to the identification mechanism (12) and the welding mechanism (11), wherein the controller (13) is configured to control, based on the position information, the welding mechanism (11) to move to a next welding point (16) when welding a welding point (16), so that the welding mechanism (11) completes sequential welding of a plurality of welding points (16) in a continuous moving process;
wherein the welding mechanism (11) comprises:
a laser head (111);
a welding galvanometer (112) electrically connected to the controller (13); and
a first driving mechanism (113) connected to the laser head (111) and the welding galvanometer (112), wherein the first driving mechanism (113) is electrically connected to the controller (13); and
the controller (13) is further configured to: control, based on the position information, the first driving mechanism (113) to drive the laser head (111) and the welding galvanometer (112) to move to the next welding point (16); and at the same time, control the welding galvanometer (112) to deflect laser (15) emitted by the laser head (111) to the welding point (16) to complete welding of the welding point (16).

2. The welding apparatus (10) according to claim 1, wherein the welding mechanism (11) further comprises:
a second driving mechanism (114) connected to the first driving mechanism (113) and the welding galvanometer (112), wherein the second driving mechanism (114) is electrically connected to the controller (13); and
the controller (13) is configured to: when the welding point (16) exceeds an adjustment range of the welding galvanometer (112), control the second driving mechanism (114) to drive the welding galvanometer (112) to move, so that the welding point (16) enters the adjustment range of the welding galvanometer (112), and the laser (15) is deflected to the welding point (16).

3. The welding apparatus (10) according to claim 1, wherein the identification mechanism (12) is further configured to measure a distance between the welding point (16) and the welding mechanism (11), to obtain a defocus amount.

4. The welding apparatus (10) according to claim 3, wherein the welding mechanism (11) comprises:
a laser head (111); and
a first driving mechanism (113), comprising a first driving unit (1131) and a second driving unit (1132), wherein the second driving unit (1132) is connected to the first driving unit (1131), the laser head (111) is connected to the second driving unit (1132), and both the first driving unit (1131) and the second driving unit (1132) are electrically connected to the controller (13); and
the controller (13) is configured to control, based on the position information, the first driving unit (1131) to drive the laser head (111) to move in a first direction, and the controller (13) is further configured to control the second driving unit (1132) to drive the laser head (111) to move in a second direction, to adjust the welding defocus amount of the laser head (111) to a preset range.

5. The welding apparatus (10) according to claim 1, wherein the identification mechanism (12) is connected to the welding mechanism (11).

6. The welding apparatus (10) according to claim 5, wherein the welding apparatus (10) further comprises a third driving mechanism (14), the third driving mechanism (14) is connected to the welding mechanism (11) and the identification mechanism (12), and the third driving mechanism (14) is configured to adjust a position of the identification mechanism (12) on the welding mechanism (11).

7. A welding method (40), comprising:
obtaining (S1) position information of welding points;
the method being **characterised by**:
controlling (S2), based on the position information, a welding mechanism to move to a next welding point when welding a welding point, so that the welding mechanism completes sequential welding of a plurality of welding points in a continuous moving process;
wherein the welding mechanism comprises a laser head and a welding galvanometer, and the controlling (S2), based on the position information, a welding mechanism to move to a next welding point when welding a welding point comprises:
adjusting the welding galvanometer based on position information of the welding point, so that laser emitted by the laser head is deflected to the welding point.

8. The welding method (40) according to claim 7, wherein the welding mechanism further comprises a second driving mechanism, the second driving mechanism is connected to the welding galvanometer, and the controlling (S2), based on the position information, a welding mechanism to move to a next welding point when welding a welding point comprises:
if the welding point exceeds an adjustment range of the welding galvanometer, driving, by the second driving mechanism, the welding galvanometer to move, so that the laser emitted by the laser head is able to be deflected to the welding point by the welding galvanometer.

9. The welding method (40) according to claim 8, wherein before the welding mechanism welds the welding point, the welding method (40) further comprises:
adjusting, by the second driving mechanism, a position of the welding galvanometer, so that the welding point is within the adjustment range of the welding galvanometer.

10. The welding method (40) according to claim 7, wherein before the welding mechanism welds the welding point, the welding method (40) further comprises:
adjusting a welding defocus amount of the welding mechanism to a preset range.

11. The welding method (40) according to claim 10, wherein the adjusting a welding defocus amount of the welding mechanism to a preset range comprises:
measuring a distance between the welding mechanism and the welding point, and obtaining the defocus amount based on the distance.

12. The welding method (40) according to claim 7, wherein before the obtaining (S1) position information of welding points, the method (40) comprises: fastening a to-be-welded member by using a welding fixture; and
the obtaining (S1) position information of welding points comprises: filtering out the welding fixture based on a height difference between the welding fixture and the welding point, to obtain the position information of the welding points.

## Patentansprüche

1. Schweißeinrichtung (10), die Folgendes umfasst:
einen Schweißmechanismus (11);
einen Identifikationsmechanismus (12), der dazu ausgelegt ist, Positionsinformationen von Schweißpunkten (16) zu erhalten;
wobei die Schweißeinrichtung (10) **gekennzeichnet ist durch**:
eine Steuerung (13), die elektrisch mit dem Identifikationsmechanismus (12) und dem Schweißmechanismus (11) verbunden ist, wobei die Steuerung (13) dazu ausgelegt ist, basierend auf den Positionsinformationen den Schweißmechanismus (11) (16) so zu steuern, dass er sich beim Schweißen eines Schweißpunkts zu einem nächsten Schweißpunkt (16) bewegt, so dass der Schweißmechanismus (11) ein sequenzielles Schweißen mehrerer Schweißpunkte (16) in einem kontinuierlichen Bewegungsprozess durchführt;
wobei der Schweißmechanismus (11) Folgendes umfasst:
einen Laserkopf (111);
ein Schweißgalvanometer (112), das elektrisch mit der Steuerung (13) verbunden ist; und
einen ersten Antriebsmechanismus (113), der mit dem Laserkopf (111) und dem Schweißgalvanometer (112) verbunden ist, wobei der erste Antriebsmechanismus (113) elektrisch mit der Steuerung (13) verbunden ist; und
wobei die Steuerung (13) ferner zu Folgendem ausgelegt ist: Steuern, basierend auf den Positionsinformationen, des ersten Antriebsmechanismus (113) so, dass er den Laserkopf (111) und das Schweißgalvanometer (112) so antreibt, dass sie sich zu dem nächsten Schweißpunkt (16) bewegen; und gleichzeitig Steuern des Schweißgalvanometers (112) so, dass der vom Laserkopf (111) emittierten Laser (15) zu dem Schweißpunkt (16) abgelenkt wird, um das Schweißen des Schweißpunkts (16) durchzuführen.

2. Schweißeinrichtung (10) nach Anspruch 1, wobei der Schweißmechanismus (11) ferner Folgendes umfasst:
einen zweiten Antriebsmechanismus (114), der mit dem ersten Antriebsmechanismus (113) und dem Schweißgalvanometer (112) verbunden ist, wobei der zweite Antriebsmechanismus (114) elektrisch mit der Steuerung (13) verbunden ist; und
wobei die Steuerung (13) zu Folgendem ausgelegt ist: wenn der Schweißpunkt (16) einen Einstellbereich des Schweißgalvanometers (112) überschreitet, Steuern des zweiten Antriebsmechanismus (114) so, dass er das Schweißgalvanometer (112) so antreibt, dass es sich so bewegt, dass der Schweißpunkt (16) in den Einstellbereich des Schweißgalvanometers (112) eintritt und der Laser (15) zu dem Schweißpunkt (16) abgelenkt wird.

3. Schweißeinrichtung (10) nach Anspruch 1, wobei der Identifikationsmechanismus (12) ferner dazu ausgelegt ist, einen Abstand zwischen dem Schweißpunkt (16) und dem Schweißmechanismus (11) zu messen, um einen Defokussierungsbetrag zu erhalten.

4. Schweißeinrichtung (10) nach Anspruch 3, wobei der Schweißmechanismus (11) Folgendes umfasst:
einen Laserkopf (111); und
einen ersten Antriebsmechanismus (113), der eine erste Antriebseinheit (1131) und eine zweite Antriebseinheit (1132) umfasst, wobei die zweite Antriebseinheit (1132) mit der ersten Antriebseinheit (1131) verbunden ist, der Laserkopf (111) mit der zweiten Antriebseinheit (1132) verbunden ist und sowohl die erste Antriebseinheit (1131) als auch die zweite Antriebseinheit (1132) elektrisch mit der Steuerung (13) verbunden sind; und
wobei die Steuerung (13) dazu ausgelegt ist, basierend auf den Positionsinformationen die erste Antriebseinheit (1131) so zu steuern, dass sie den Laserkopf (111) so antreibt, dass er sich in eine erste Richtung bewegt, und die Steuerung (13) ferner dazu ausgelegt ist, die zweite Antriebseinheit (1132) so zu steuern, dass sie den Laserkopf (111) so antreibt, dass er sich in eine zweite Richtung bewegt, um den Schweißungsdefokussierungsbetrag des Laserkopfs (111) auf einen vorab festgelegten Bereich einzustellen.

5. Schweißeinrichtung (10) nach Anspruch 1, wobei der Identifikationsmechanismus (12) mit dem Schweißmechanismus (11) verbunden ist.

6. Schweißeinrichtung (10) nach Anspruch 5, wobei die Schweißeinrichtung (10) ferner einen dritten Antriebsmechanismus (14) umfasst, der dritte Antriebsmechanismus (14) mit dem Schweißmechanismus (11) und dem Identifikationsmechanismus (12) verbunden ist und der dritte Antriebsmechanismus (14) dazu ausgelegt ist, eine Position des Identifikationsmechanismus (12) auf dem Schweißmechanismus (11) einzustellen.

7. Schweißverfahren (40), das Folgendes umfasst:
Erhalten (S1) von Positionsinformationen von Schweißpunkten; wobei das Verfahren **gekennzeichnet ist durch**:
Steuern (S2), basierend auf den Positionsinformationen, eines Schweißmechanismus so, dass er sich beim Schweißen eines Schweißpunkts zu einem nächsten Schweißpunkt bewegt, so dass der Schweißmechanismus ein sequentielles Schweißen mehrerer Schweißpunkte in einem kontinuierlichen Bewegungsprozess durchführt;
wobei der Schweißmechanismus einen Laserkopf und ein Schweißgalvanometer umfasst und das Steuern (S2), basierend auf den Positionsinformationen, eines Schweißmechanismus so, dass er sich beim Schweißen eines Schweißpunkts zu einem nächsten Schweißpunkt bewegt, Folgendes umfasst:
Einstellen des Schweißgalvanometers basierend auf Positionsinformationen des Schweißpunkts so, dass der vom Laserkopf emittierte Laser zu dem Schweißpunkt abgelenkt wird.

8. Schweißverfahren (40) nach Anspruch 7, wobei der Schweißmechanismus ferner einen zweiten Antriebsmechanismus umfasst, der zweite Antriebsmechanismus mit dem Schweißgalvanometer verbunden ist und das Steuern (S2), basierend auf den Positionsinformationen, eines Schweißmechanismus so, dass er sich beim Schweißen eines Schweißpunkts zu einem nächsten Schweißpunkt bewegt, Folgendes umfasst:
falls der Schweißpunkt einen Einstellbereich des Schweißgalvanometers überschreitet, Antreiben, durch den zweiten Antriebsmechanismus, des Schweißgalvanometers so, dass es sich so bewegt, dass der vom Laserkopf emittierte Laser durch das Schweißgalvanometer zu dem Schweißpunkt abgelenkt werden kann.

9. Schweißverfahren (40) nach Anspruch 8, wobei, bevor der Schweißmechanismus den Schweißpunkt verschweißt, das Schweißverfahren (40) ferner Folgendes umfasst:
Einstellen, durch den zweiten Antriebsmechanismus, einer Position des Schweißgalvanometers so, dass der Schweißpunkt innerhalb des Einstellbereichs des Schweißgalvanometers liegt.

10. Schweißverfahren (40) nach Anspruch 7, wobei, bevor der Schweißmechanismus den Schweißpunkt verschweißt, das Schweißverfahren (40) ferner Folgendes umfasst:
Einstellen eines Schweißungsdefokussierungsbetrags des Schweißmechanismus auf einen vorab festgelegten Bereich.

11. Schweißverfahren (40) nach Anspruch 10, wobei das Einstellen eines Schweißungsdefokussierungsbetrags des Schweißmechanismus auf einen vorab festgelegten Bereich Folgendes umfasst:
Messen eines Abstands zwischen dem Schweißmechanismus und dem Schweißpunkt und Erhalten des Defokussierungsbetrags basierend auf dem Abstand.

12. Schweißverfahren (40) nach Anspruch 7, wobei vor dem Erhalten (S1) von Positionsinformationen von Schweißpunkten das Verfahren (40) Folgendes umfasst: Befestigen eines zu schweißenden Elements unter Verwendung einer Schweißvorrichtung; und
wobei das Erhalten (S1) von Positionsinformationen von Schweißpunkten Folgendes umfasst: Ausfiltern der Schweißvorrichtung basierend auf einer Höhendifferenz zwischen der Schweißvorrichtung und dem Schweißpunkt, um die Positionsinformationen der Schweißpunkte zu erhalten.

## Revendications

1. Appareil de soudage (10), comprenant :
un mécanisme de soudage (11) ;
un mécanisme d'identification (12) configuré pour obtenir des informations de position de points de soudage (16) ;
l'appareil de soudage (10) étant **caractérisé par** :
un dispositif de commande (13) électriquement connecté au mécanisme d'identification (12) et au mécanisme de soudage (11), le dispositif de commande (13) étant configuré pour commander, sur la base des informations de position, le mécanisme de soudage (11) pour qu'il se déplace jusqu'à un point de soudage (16) suivant lors du soudage d'un point de soudage (16), de sorte que le mécanisme de soudage (11) achève le soudage séquentiel d'une pluralité de points de soudage (16) dans un processus de déplacement continu ;
le mécanisme de soudage (11) comprenant :
une tête laser (111) ;
un galvanomètre de soudage (112) électriquement connecté au dispositif de commande (13) ; et
un premier mécanisme d'entraînement (113) connecté à la tête laser (111) et au galvanomètre de soudage (112), le premier mécanisme d'entraînement (113) étant électriquement connecté au dispositif de commande (13) ; et
le dispositif de commande (13) est en outre configuré pour : commander, sur la base des informations de position, le premier mécanisme d'entraînement (113) pour qu'il entraîne la tête laser (111) et le galvanomètre de soudage (112) à se déplacer jusqu'au point de soudage (16) suivant ; et en même temps, commander le galvanomètre de soudage (112) pour qu'il dévie un laser (15) émis par la tête laser (111) vers le point de soudage (16) afin d'achever le soudage du point de soudage (16).

2. Appareil de soudage (10) selon la revendication 1, dans lequel le mécanisme de soudage (11) comprend en outre :
un deuxième mécanisme d'entraînement (114) connecté au premier mécanisme d'entraînement (113) et au galvanomètre de soudage (112), le deuxième mécanisme d'entraînement (114) étant électriquement connecté au dispositif de commande (13) ; et
le dispositif de commande (13) est configuré pour : lorsque le point de soudage (16) dépasse une plage d'ajustement du galvanomètre de soudage (112), commander le deuxième mécanisme d'entraînement (114) pour qu'il entraîne le galvanomètre de soudage (112) à se déplacer, de sorte que le point de soudage (16) entre dans la plage d'ajustement du galvanomètre de soudage (112), et que le laser (15) soit dévié vers le point de soudage (16).

3. Appareil de soudage (10) selon la revendication 1, dans lequel le mécanisme d'identification (12) est en outre configuré pour mesurer une distance entre le point de soudage (16) et le mécanisme de soudage (11), afin d'obtenir une quantité de défocalisation.

4. Appareil de soudage (10) selon la revendication 3, dans lequel le mécanisme de soudage (11) comprend :
une tête laser (111) ; et
un premier mécanisme d'entraînement (113), comprenant une première unité d'entraînement (1131) et une deuxième unité d'entraînement (1132), dans lequel la deuxième unité d'entraînement (1132) est connectée à la première unité d'entraînement (1131), la tête laser (111) est connectée à la deuxième unité d'entraînement (1132), et la première unité d'entraînement (1131) et la deuxième unité d'entraînement (1132) sont toutes deux électriquement connectées au dispositif de commande (13) ; et
le dispositif de commande (13) est configuré pour commander, sur la base des informations de position, la première unité d'entraînement (1131) pour qu'elle entraîne la tête laser (111) à se déplacer dans une première direction, et le dispositif de commande (13) est en outre configuré pour commander la deuxième unité d'entraînement (1132) afin qu'elle entraîne la tête laser (111) à se déplacer dans une deuxième direction, pour ajuster la quantité de défocalisation de soudage de la tête laser (111) à une plage prédéterminée.

5. Appareil de soudage (10) selon la revendication 1, dans lequel le mécanisme d'identification (12) est connecté au mécanisme de soudage (11).

6. Appareil de soudage (10) selon la revendication 5, dans lequel l'appareil de soudage (10) comprend en outre un troisième mécanisme d'entraînement (14), le troisième mécanisme d'entraînement (14) est connecté au mécanisme de soudage (11) et au mécanisme d'identification (12), et le troisième mécanisme d'entraînement (14) est configuré pour ajuster une position du mécanisme d'identification (12) sur le mécanisme de soudage (11).

7. Procédé de soudage (40), comprenant :
l'obtention (S1) d'informations de position de points de soudage ; le procédé étant **caractérisé par** :
la commande (S2), sur la base des informations de position, d'un mécanisme de soudage pour qu'il se déplace jusqu'à un point de soudage suivant lors du soudage d'un point de soudage, de sorte que le mécanisme de soudage achève le soudage séquentiel d'une pluralité de points de soudage dans un processus de déplacement continu ;
dans lequel le mécanisme de soudage comprend une tête laser et un galvanomètre de soudage, et la commande (S2), sur la base des informations de position, d'un mécanisme de soudage pour qu'il se déplace jusqu'à un point de soudage suivant lors du soudage d'un point de soudage comprend : l'ajustement du galvanomètre de soudage sur la base des informations de position du point de soudage, de sorte qu'un laser émis par la tête laser soit dévié vers le point de soudage.

8. Procédé de soudage (40) selon la revendication 7, dans lequel le mécanisme de soudage comprend en outre un deuxième mécanisme d'entraînement, le deuxième mécanisme d'entraînement est connecté au galvanomètre de soudage, et la commande (S2), sur la base des informations de position, d'un mécanisme de soudage pour qu'il se déplace jusqu'à un point de soudage suivant lors du soudage d'un point de soudage comprend :
si le point de soudage dépasse une plage d'ajustement du galvanomètre de soudage, l'entraînement, par le deuxième mécanisme d'entraînement, du galvanomètre de soudage à se déplacer, de sorte que le laser émis par la tête laser soit apte à être dévié vers le point de soudage par le galvanomètre de soudage.

9. Procédé de soudage (40) selon la revendication 8, dans lequel avant que le mécanisme de soudage soude le point de soudage, le procédé de soudage (40) comprend en outre :
l'ajustement, par le deuxième mécanisme d'entraînement, d'une position du galvanomètre de soudage, de sorte que le point de soudage soit au sein de la plage d'ajustement du galvanomètre de soudage.

10. Procédé de soudage (40) selon la revendication 7, dans lequel avant que le mécanisme de soudage soude le point de soudage, le procédé de soudage (40) comprend en outre :
l'ajustement d'une valeur de défocalisation de soudage du mécanisme de soudage à une plage prédéfinie.

11. Procédé de soudage (40) selon la revendication 10, dans lequel l'ajustement d'une quantité de défocalisation de soudage du mécanisme de soudage à une plage prédéterminée comprend :
la mesure d'une distance entre le mécanisme de soudage et le point de soudage, et l'obtention de la quantité de défocalisation basée sur la distance.

12. Procédé de soudage (40) selon la revendication 7, dans lequel avant l'obtention (S1) d'informations de position de points de soudage, le procédé (40) comprend : la fixation d'un élément à souder en utilisant un dispositif de soudage ; et
l'obtention (S1) d'informations de position de points de soudage comprend : le filtrage du dispositif de soudage sur la base d'une différence de hauteur entre le dispositif de soudage et le point de soudage, afin d'obtenir les informations de position des points de soudage.
